# EUROPEAN PATENT APPLICATION

(11) **EP 1 733 961 A2**
(43) Date of publication of application: **20.12.2006**
(21) Application number: 06012406.2
(22) Date of filing: 16.06.2006
(51) Int. Cl.: B62M 7/12

(54) **Hybrid system straddle-type vehicle**

(30) Priority: 17.06.2005 JP 2005177675
(71) Applicant: YAMAHA HATSUDOKI KABUSHIKI KAISHA, Iwata-shi, Shizuoka-ken 438-8501 (JP)
(72) Inventor: Masuda, Tatsuyuki, Iwata-shi Shizuoka-ken 438-8501 (JP); Hosoi, Yukiharu, Iwata-shi Shizuoka-ken 438-8501 (JP); Fukuhara, Yukihide, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a hybrid system straddle-type vehicle comprising an engine, being disposed on a center line B-B in the vehicle width direction, a generator converting at least part of the mechanical energy generated by the engine 110 to electrical energy, and a motor reconverting the electrical energy to mechanical energy as a source to drive a wheel, wherein the generator 101 and the motor 61 are allocated to opposite sides of the vehicle center line B-B.

## Description

The present invention relates to a hybrid system straddle-type vehicle including an engine, a generator converting mechanical energy generated by the engine to electrical energy, a motor reconverting the electrical energy to the mechanical energy to drive a wheel.

Conventionally, a hybrid system straddle-type vehicle is known, which including a motor, other than an engine, that functions as a device for propelling the straddle-type vehicle by generating the power, and a generator that converts mechanical energy generated by the engine to electrical energy (for example, see JP-A-Hei 10-297570 and JP-B-3296931).

In the conventional art noted above, the engine is positioned in a center portion of the straddle-type vehicle, and a power transmission device which transmits the mechanical energy generated by the engine to a rear wheel is provided. In the conventional art, because each volume of the power transmission device, the motor and the generator is large, the power transmission device is positioned on one side and the motor and the generator are positioned on the other side relative to a vehicle center line extending fore to aft, in consideration of the volume balance between the right and left sides.

However, each of the generator and the motor is one of heavy components incorporated in the hybrid system straddle-type vehicle. Thus, if the generator and the motor are partially disposed on the right or left side in the vehicle width direction, the weight balance between the right and left sides becomes worse. Also, the weight balance between the right and left sides considerably affects the controllability of the hybrid system straddle-type vehicle.

Under the circumstances, it is the objective of the present invention to provide a hybrid system straddle-type vehicle that can have proper weight balance between the right and left sides, while a motor and a generator are compactly arranged, so that the controllability thereof is improved.

This objective is solved in an inventive manner by a hybrid system straddle-type vehicle comprising an engine, being disposed on a center line B-B in the vehicle width direction, a generator converting at least part of the mechanical energy generated by the engine to electrical energy, and a motor reconverting the electrical energy to mechanical energy as a source to drive a wheel, wherein the generator and the motor are allocated to opposite sides of the vehicle center line B-B.

Further, according to a preferred embodiment the hybrid system straddle-type vehicle comprises the engine, the generator converting the mechanical energy generated by the engine to electrical energy, and the motor reconverting the electrical energy to the mechanical energy to drive a wheel, wherein the engine is disposed so as to be on the vehicle center line B-B extending fore to aft of the hybrid system straddle-type vehicle, a crankshaft of the engine extends in a width direction of the vehicle, a motor rotational shaft of the motor is coupled with the wheel, and the generator is disposed on one side and the motor is disposed on the other side relative to the vehicle center line B-B.

Preferably, the motor rotational shaft extends generally parallel to an axle of the wheel and is coupled with the wheel.

Further, preferably a cylinder center line F-F passing through a generally center portion of a cylinder of the engine is positioned on the vehicle center line B-B in a plan view of the hybrid system straddle-type vehicle.

According to another embodiment, the hybrid system straddle-type vehicle further comprises an air cleaner purifying air introduced into the engine, and a muffler attenuating noise generated when exhaust gases of the engine are discharged, the muffler is disposed on the generator side and the air cleaner is disposed on the motor side relative to the vehicle center line B-B.

Yet further, preferably the hybrid system straddle-type vehicle comprises a suspension shaft suspended by a vehicle frame, and a swing unit including the engine and the motor and swinging about an axis of the suspension shaft, and a rear end portion of the swing unit supporting the wheel for rotation.

Further, the motor rotational shaft may be positioned in front of the axle.

Additionally, the motor rotational shaft may be positioned lower than a line C-C connecting the axle and the suspension shaft to each other.

Likewise, the motor rotational shaft may be positioned higher than a line E-E connecting the axle and the crankshaft to each other.

In the following, the present invention is explained in greater detail with respect to several embodiments thereof in conjunction with the accompanying drawings, wherein:
- FIG. 1: is a left side elevational view of a hybrid system straddle-type vehicle,
- FIG. 2: is a cross sectional view of a portion of the hybrid system straddle-type vehicle having an engine, a motor and a generator,
- FIG. 3: is a top plan view of a portion of the hybrid system straddle-type vehicle having the engine, the generator, the motor, a muffler and an air cleaner, and
- FIG. 4: is a left side elevational view of the hybrid system straddle-type vehicle having the engine, the motor, the muffler and the air cleaner.

### Description of Reference Numerals:

- 1:: hybrid system straddle-type vehicle
- 10:: front wheel
- 15:: vehicle frame
- 15:: x rear wheel
- 30:: handle bar
- 40:: front wheel axle
- 50:: rear wheel axle
- 50:: xreduction gear
- 60:: motor cover
- 61:: motor
- 62:: motor rotor
- 63:: motor stator
- 63:: battery
- 65:: motor rotational shaft
- 70:: muffler
- 70:: xexhaust pipe
- 75:: rear suspension
- 80:: air cleaner
- 80:: intake pipe
- 100:: generator cover
- 101:: generator
- 101:: generator rotor
- 103:: generator stator
- 105:: generator rotational shaft
- 110:: engine
- 111:: cylinder
- 115:: crankshaft
- 130:: suspension shaft
- 131:: suspension shaft opening
- 200:: swing unit

Next, with reference to drawings, an embodiment will be described. In the following descriptions of the drawings, the same or similar portions are assigned with the same or similar reference numerals or symbols. However, it should be noted that the drawings are schematic.

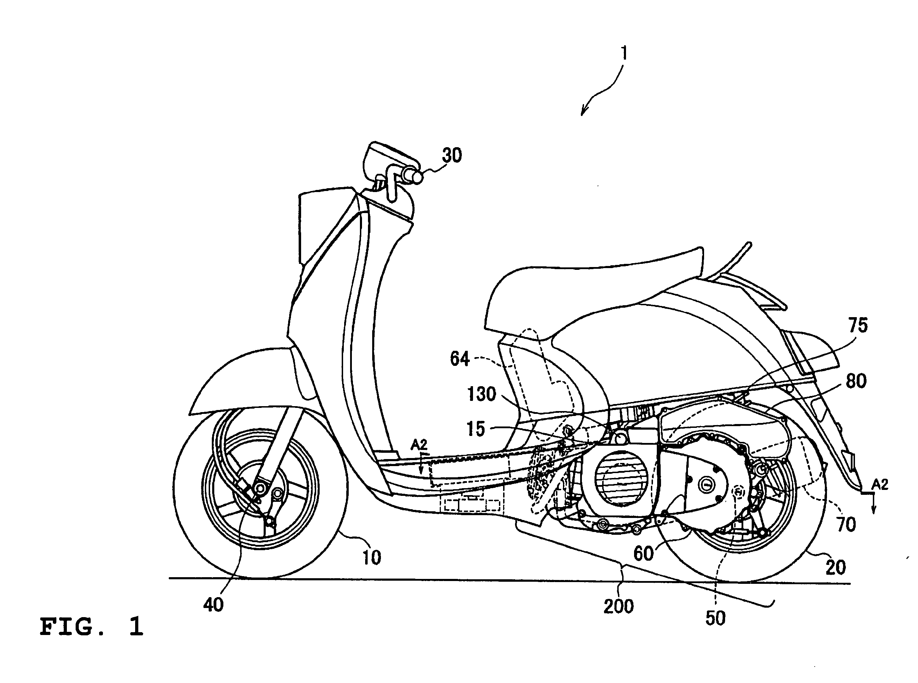

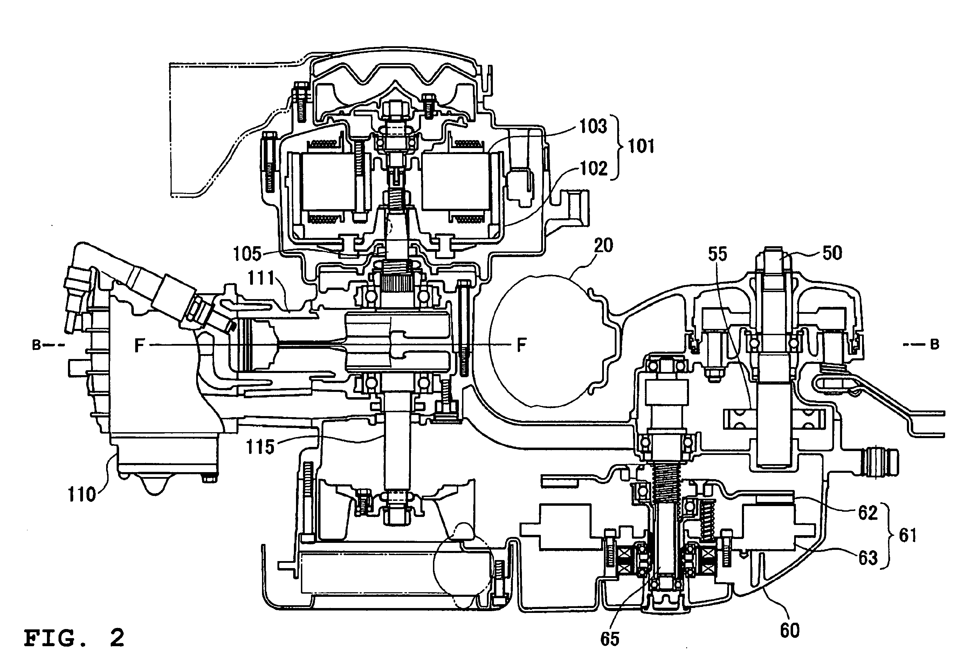

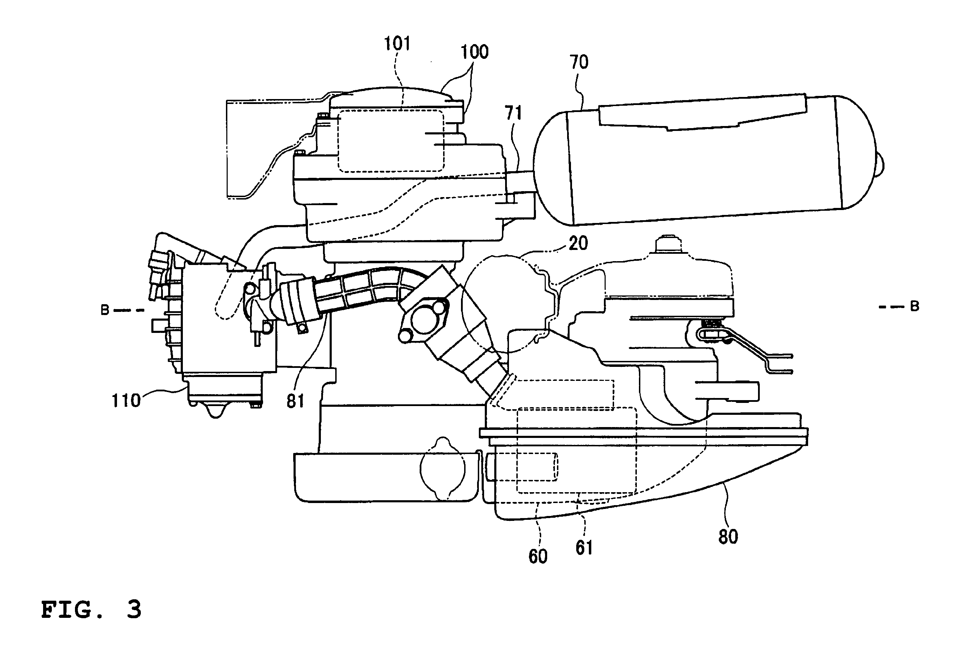

FIG. 1 is a left side elevational view of a hybrid system straddle-type vehicle 1. Incidentally, the straddle-type vehicle means a vehicle having two, three or four wheels, and on which a man can ride in a posture such that he or she straddles a saddle. For example, the vehicle includes a motorcycle, a buggy and so forth. Also, the straddle-type vehicle includes a scooter type vehicle on which a person can ride with his or her feet put side by side.

As shown in FIG. 1, the hybrid system straddle-type vehicle 1 has a front wheel 10, a rear wheel 20, handle bars 30, a front wheel axle 40, a rear wheel axle 50, a motor cover 60, a muffler 70, an air cleaner 80 and a suspension shaft 130.

The suspension shaft 130 is suspended by a vehicle frame 15. The shaft 130 includes an engine 110 and a motor 61 both described below, and suspends a swing unit 200 swinging about an axis of the suspension shaft 130. A rear end portion of the swing unit 200 is supported by a rear suspension 75. Also, the rear wheel 20 is supported at the rear end portion of the swing unit 200 for rotation.

FIG. 2 is a cross sectional view taken along the line A2-A2 of FIG. 1. As shown in FIG. 2, a cylinder 111 positioned in a center portion of the engine 110 is placed on a vehicle center line B-B extending fore to aft. A crankshaft 115 of the engine 110 extends in a width direction of the vehicle. Specifically, a cylinder center line F-F passing through a generally center portion of a cylinder member (cylinder) of the engine 110 is positioned on the vehicle center line B-B in a plan view of the hybrid system straddle-type vehicle 1.

A generator rotational shaft 105 is fixed to the crankshaft 115 and generally coaxially extends with the crankshaft 115. Incidentally, the generator rotational shaft 105 is a boss for the generator rotor 102 incorporated in a generator 101 to rotate. The generator rotor 102 and a generator stator 103 are included in the generator 101. As thus constructed, the engine 110 can rotate the generator rotor 102, and the generator rotor 102 rotates to generate electrical energy. Additionally, in this embodiment, the electric energy is electric power, and the mechanical energy is torque.

Further, the rear wheel 20 is disposed on the vehicle center line B-B extending fore to aft. A motor rotational shaft 65 extends generally parallel to the rear wheel axle 50. Incidentally, the motor rotational shaft 65 is a rotational shaft for a motor rotor 62 incorporated in the motor 61 to rotate. The motor rotor 62 and a motor stator 63 are included in the motor 61.

The motor rotational shaft 65 is coupled with the rear wheel 20 (rear wheel axle 50) through a reduction gear unit 55 (partially not shown).

The motor rotor 62 rotates using the electrical energy generated by the generator 101 and electrical energy accumulated in a battery 64. The motor rotor 62 rotates to generate the mechanical energy. The mechanical energy generated by the motor 61 in such a manner is transmitted to the rear wheel axle 50 from the motor rotational shaft 65 through the reduction gear unit 55.

As thus described, the hybrid system straddle-type vehicle 1 according to this embodiment is a series hybrid system straddle-type vehicle which includes the engine 110, the generator 101 converting the mechanical energy generated by the engine 110 to the electrical energy, and the motor 61 reconverting the generated electrical energy to the mechanical energy to drive the rear wheel 20 (wheel).

The generator 101 is disposed on one side and the motor 61 is disposed on the other side relative to the vehicle center line B-B extending fore to aft in the hybrid system straddle-type vehicle 1. Incidentally, in this embodiment, the generator 101 is positioned on the right side relative to a center of the vehicle width direction of the hybrid system straddle-type vehicle 1, while the motor 61 is positioned on the left side relative to the center of the vehicle width direction of the hybrid system straddle-type vehicle 1.

FIG. 3 is a top plan view of a part of the hybrid system straddle-type vehicle 1 where the engine 110, a generator cover 100, the generator 101, a motor cover 60, a motor 61, a muffler 70, an exhaust pipe 71, an air cleaner 80 and an intake pipe 81 are disposed.

Additionally, FIG. 3 shows a position of the generator 101 including the generator rotor 102 and the generator stator 103 and a position of the motor 61 including the motor rotor 62 and the motor stator 63.

As shown in FIG. 3, the air cleaner 80 which purifies air introduced into the engine 110 is connected to the engine 110 through the intake pipe 81. The muffler 70 which attenuates noise generated when exhaust gases are discharged from the engine 110 is connected to the engine 110 through the exhaust pipe 71.

As shown in FIG. 3, the air cleaner 80 and the muffler 70 are disposed so as to interpose the vehicle center line B-B therebetween. In this embodiment, the air cleaner 80 is positioned on the left side relative to the center of the vehicle width direction of the hybrid system straddle-type vehicle 1, i.e., on the motor 61 side, and the muffler 70 is positioned on the right side relative to the center of the vehicle width direction of the hybrid system straddle-type vehicle 1, i.e., on the generator 101 side.

As thus discussed, the generator 101 and the muffler 70 are disposed on the one side and the motor 61 and the air cleaner 80 are disposed on the other side relative to the vehicle center line B-B. In this embodiment, the generator 101 and the muffler 70 are disposed on the right side and the motor 61 and the air cleaner 80 are disposed on the left side relative to the vehicle center line B-B.

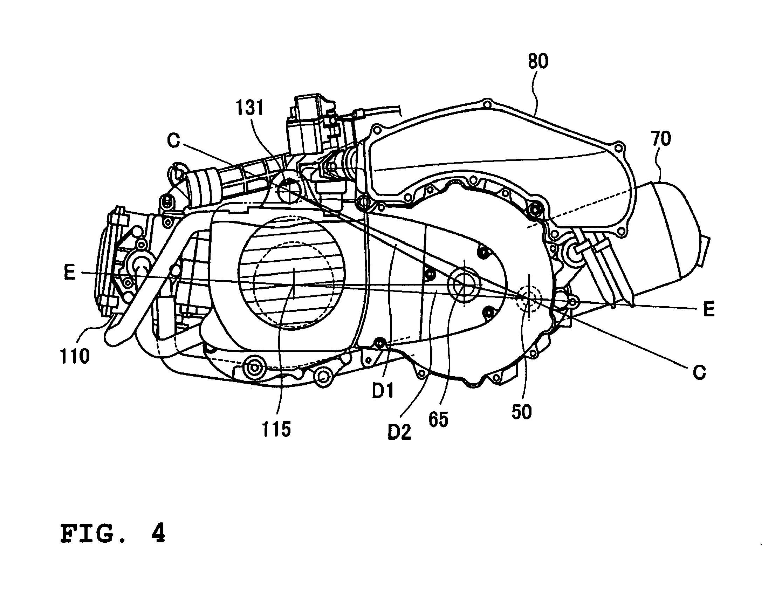

FIG. 4 is a left side elevational view under a condition that the engine 110, the motor 61 shown in FIG. 2, the muffler 70 and the air cleaner 80 are provided in the hybrid system straddle-type vehicle 1. As shown in FIG. 4, the motor rotational shaft 65 is positioned in front of the rear wheel axle 50.

The motor rotational shaft 65 is positioned lower than a line C-C connecting the center of the rear wheel axle 50 and a center of a suspension shaft opening 131 through which the suspension shaft 130 extends to each other. Incidentally, the suspension shaft 130 shown in FIG. 1 extends through the suspension shaft opening 131; thereby, the swing unit 200 is suspended by the suspension shaft 130 for swing movement. In addition, a rear end portion of the swing unit 200 is supported by a rear suspension 75.

Thus, when the swing unit 200 including the engine 110 and the motor 61 is supported by the suspension shaft 130 for the swing movement, the motor rotational shaft 65, the rear wheel axle 50 and the suspension shaft 130 do not line up but together form a triangle D1.

Also, the motor rotational shaft 65 is positioned higher than a line E-E connecting the rear wheel axle 50 and the crankshaft 115 to each other.

Therefore, when the swing unit 200 including the engine 110 and the motor 61 is suspended by the suspension shaft 130 for the swing movement, the motor rotational shaft 65, the rear wheel axle 50 and the crankshaft 115 do not line up but together form a triangle D2.

According to the hybrid system straddle-type vehicle 1 of the embodiment, the engine 110 which is one of heavy components incorporated in the hybrid system straddle-type vehicle 1 is disposed on the center in the vehicle width direction, and the generator 101 and the motor 61 are allotted to the right and left sides of the hybrid system straddle-type vehicle 1. The hybrid system straddle-type vehicle 1 thus has proper weight balance between the right and left sides. Accordingly, the controllability of the hybrid system straddle-type vehicle 1 is improved.

According to the hybrid system straddle-type vehicle 1, a size of a lower part of the hybrid system straddle-type vehicle 1 can be small. Thus, a bank angle of the hybrid system straddle-type vehicle 1 can be large.

According to the hybrid system straddle-type vehicle 1, the motor rotational shaft 65 extends generally parallel to the rear wheel axle 50 and coupled with the rear wheel 20. The motor 61 thus does not protrude outward in the vehicle width direction of the hybrid system straddle-type vehicle 1. The swing unit 200 including the motor 61 and so forth can be compact.

The cylinder center line F-F is positioned on the vehicle center line B-B in a plan view of the hybrid system straddle-type vehicle 1. That is, the engine 110 is positioned in a center area in the vehicle width direction. Thus, the weight balance of the hybrid system straddle-type vehicle 1 between the right and left sides thereof can be further properly improved.

In the hybrid system straddle-type vehicle 1, the muffler 70 is disposed on the one side and the air cleaner 80 is disposed on the other side relative to the vehicle center line B-B extending fore to aft. In this regard, the one side where the muffler 70 is disposed has the generator 101, while the other side where the air cleaner 80 is disposed has the motor 61.

Additionally, the air cleaner 80 and the muffler 70 are lighter than the motor 61 and the generator 101; however, they are heavier than other components of the hybrid system straddle-type vehicle 1. In addition, the generator 101 is lighter than the motor 61, and the air cleaner 80 is lighter than the muffler 70.

According to the embodiment, the generator 101 which is relatively light and the muffler 70 which is relatively heavy are disposed on the one side, and the motor 61 which is relatively heavy and the air cleaner 80 which is relatively light are disposed on the other side, relative to the vehicle center line B-B extending fore to aft. Thus, the weight balance of the hybrid system straddle-type vehicle 1 between the right and left sides thereof can be properly improved. The controllability of the hybrid system straddle-type vehicle 1 is further improved.

The motor rotational shaft 65 is positioned in front of the rear wheel axle 50. Thereby, the motor 61 swinging with the rear wheel is positioned adjacent to the center of the swing movement. The moment of the rotation of the rear wheel 20 thus decreases, and the grip of the rear wheel 20 onto the ground can be further improved. Therefore, the controllability is further improved.

Because the motor 61 and the generator 101 oppose each other relative to the vehicle center line B-B extending fore to aft in the embodiment, the motor 61 and the generator 101 do not interfere with each other even if the motor 61 is placed at a relatively forward position.

Also, in the embodiment, the motor rotational shaft 65 of the motor 61 does not extend generally coaxially with the rear wheel axle 50 but extends generally parallel thereto and is coupled with the rear wheel 20 (rear wheel axle 50).

In general, a device for reducing a rotational speed of the motor 61 is necessary to transmit the rotation of the motor rotational shaft 65 to the rear wheel axle 50 because the rotational speed of the rear wheel 20 is lower than the rotational speed of the motor 61. Typically, in a hybrid system straddle-type vehicle 1, the motor rotational shaft 65 and the rear wheel axle 50 are coaxially disposed using complicated parts such as, for example, a planetary gear unit and a harmonic drive unit. In this embodiment, however, the rotation of the motor rotational shaft 65 can be transmitted to the rear wheel axle 50 using the reduction gear unit which is provided onto a typical straddle-type vehicle that only has an engine as a device for generating the propulsion force.

In the embodiment, the motor rotational shaft 65 is positioned lower than the line C-C connecting the center of the rear wheel axle 50 and the center of the suspension shaft 130 suspending the swing unit 200 to each other. Therefore, the motor rotational shaft 65, the rear wheel axle 50 and the suspension shaft 130 do not line up but together form the triangle D1. The rigidity of the hybrid system straddle-type vehicle 1 thus can be increased. The controllability of the hybrid system straddle-type vehicle 1 can be further improved, accordingly.

In the embodiment, the motor rotational shaft 65 is positioned higher than the line E-E connecting the rear wheel axle 50 and the crankshaft 115 to each other. That is, when the swing unit 200 including the engine 110 and the motor 61 is supported by the suspension shaft 130 for swing movement, the motor rotational shaft 65, the rear wheel shaft 50 and the crankshaft 115 do not line up but together form the triangle D2.

Therefore, the peripheral end portion of the motor 61 can be placed in an upper area so as to sufficiently ensure the lowest height from the ground. The bank angle of the hybrid system straddle-type vehicle 1 can be larger, accordingly.

### Other Embodiments

Although the present teaching has been described in accordance with the embodiment discussed above, it should not be understood that the descriptions and drawings which form parts of this disclosure explain the overall teaching. This disclosure will make alternatives, other embodiments and usage technology clear to the skilled persons.

For example, the hybrid system straddle-type vehicle 1 in the embodiment discussed above is a series hybrid system straddle-type vehicle. However, the vehicle can be a parallel hybrid system straddle-type vehicle. The parallel hybrid system straddle-type vehicle has a power transmission device that transmits the mechanical energy generated by an engine to a rear wheel axle. Normally, the power transmission device is partially positioned at the right or left side relative to the vehicle center line extending fore to aft. The present invention thus can apply to the parallel hybrid system straddle-type vehicle by positioning the power transmission device and the generator on one side and the motor on the other side relative to the vehicle center line extending fore to aft, or by positioning the generator on the one side and the power transmission device and the motor on the other side relative to the vehicle center line extending fore to aft.

Additionally, in the parallel hybrid system straddle-type vehicle, the entire mechanical energy generated by the engine is not converted to the electrical energy. A part of the mechanical energy is transmitted to the rear wheel axle to directly drive the rear wheel. In addition, another part of the mechanical energy generated by the engine is converted to the electrical energy to be accumulated into the battery.

The description above discloses (amongst others) in accordance with a first aspect, a hybrid system straddle-type vehicle (hybrid system straddle-type vehicle 1) including an engine (engine 110), a generator (generator 101) converting mechanical energy generated by the engine to electrical energy, a motor (motor 61) reconverting the electrical energy to the mechanical energy to drive a wheel (rear wheel 20), the engine is disposed so as to be on a vehicle center (B-B) line extending fore to aft of the hybrid system straddle-type vehicle, a crankshaft (crankshaft 115) of the engine extends in a width direction of the vehicle, a motor rotational shaft (motor rotational shaft 65) of the motor is coupled with the wheel, and the generator is disposed on one side and the motor is disposed on the other side relative to the vehicle center line.

According to the aspect, the engine which is one of heavy components incorporated in the hybrid system straddle-type vehicle is disposed on the center in the vehicle width direction, and the generator and the motor are allocated to the right and left sides of the hybrid system straddle-type vehicle. The hybrid system straddle-type vehicle thus has proper weight balance between the right and left sides. Accordingly, the controllability of the hybrid system straddle-type vehicle is improved.

Also, according to the aspect, a size of a lower part of the hybrid system straddle-type vehicle can be small. Thus, a bank angle of the hybrid system straddle-type vehicle can be large.

In the embodiment of the hybrid system straddle-type vehicle of the first aspect, the motor rotational shaft can extend generally parallel to an axle of the wheel (rear wheel 50) and can be coupled with the wheel.

In the embodiment of the hybrid system straddle-type vehicle of the first aspect, a cylinder center line (F-F) passing through a generally center portion of a cylinder of the engine can be positioned on the vehicle center line in a plan view of the hybrid system straddle-type vehicle.

The embodiment of the hybrid system straddle-type vehicle of the first aspect may further include an air cleaner (air cleaner 80) purifying air introduced into the engine, and a muffler (muffler 70) attenuating noise generated when exhaust gases of the engine are discharged, wherein the muffler can be disposed on the generator side and the air cleaner can be disposed on the motor side relative to the vehicle center line.

In accordance with an embodiment of a second aspect, the hybrid system straddle-type vehicle according to the first aspect may further include a suspension shaft (suspension shaft 130) suspended by a vehicle frame (vehicle frame 15), and a swing unit (swing unit 200) including the engine and the motor and swinging about an axis of the suspension shaft, and a rear end portion of the swing unit can support the wheel for rotation.

In the embodiment of the hybrid system straddle-type vehicle of the second aspect, the motor rotational shaft can be positioned in front of the axle.

In the embodiment of the hybrid system straddle-type vehicle of the second aspect, the motor rotational shaft can be positioned lower than a line (C-C) connecting the axle and the suspension shaft to each other.

In the embodiment of the hybrid system straddle-type vehicle of the second aspect, the motor rotational shaft can be positioned higher than a line (E-E) connecting the axle and the crankshaft to each other.

The teaching of the present embodiments and aspects can provide a hybrid system straddle-type vehicle that can have proper weight balance between the right and left sides, while a motor and a generator are compactly arranged, so that the controllability thereof is improved.

In a particularly preferred embodiment, the description above discloses in order to provide a hybrid system straddle-type vehicle that can have proper weight balance between the right and left sides, while a motor and a generator are compactly arranged, so that the controllability thereof is improved, a hybrid system straddle-type vehicle comprising an engine 110 being disposed so as to be on a vehicle center line B-B extending fore to aft of the hybrid system straddle-type vehicle, a crankshaft 115 of the engine 110 extending in a width direction of the vehicle, a motor rotational shaft 65 of a motor 61 being coupled with a rear wheel 20, and a generator 101 being disposed on one side and the motor 61 being disposed on the other side relative to the vehicle center line B-B.

In line with the above, according to a first aspect, there is disclosed an embodiment of a hybrid system straddle-type vehicle comprising an engine; a generator converting mechanical energy generated by the engine to electrical energy; a motor reconverting the electrical energy to the mechanical energy to drive a wheel, wherein the engine is disposed so as to be on a vehicle center line extending fore to aft of the hybrid system straddle-type vehicle, a crankshaft of the engine extends in a width direction of the vehicle, a motor rotational shaft of the motor is coupled with the wheel, and the generator is disposed on one side and the motor is disposed on the other side relative to the vehicle center line.

According to a second aspect, the motor rotational shaft may extend generally parallel to an axle of the wheel and is coupled with the wheel.

According to a third aspect, a cylinder center line passing through a generally center portion of a cylinder of the engine may be positioned on the vehicle center line in a plan view of the hybrid system straddle-type vehicle.

According to a fourth aspect, the hybrid system straddle-type vehicle may further comprise an air cleaner purifying air introduced into the engine; and a muffler attenuating noise generated when exhaust gases of the engine are discharged, the muffler is disposed on the generator side and the air cleaner is disposed on the motor side relative to the vehicle center line.

According to a fifth aspect, the hybrid system straddle-type vehicle may further comprise a suspension shaft suspended by a vehicle frame; and a swing unit including the engine and the motor and swinging about an axis of the suspension shaft, and a rear end portion of the swing unit supporting the wheel for rotation.

According to a sixth aspect, the motor rotational shaft may be positioned in front of the axle.

According to a seventh aspect, the motor rotational shaft may be positioned lower than a line connecting the axle and the suspension shaft to each other.

According to an eight aspect, the motor rotational shaft may be positioned higher than a line connecting the axle and the crankshaft to each other.

## Claims

1. Hybrid system straddle-type vehicle comprising an engine (110), being disposed on a center line (B-B) in the vehicle width direction, a generator (101) converting at least part of the mechanical energy generated by the engine (110) to electrical energy, and a motor (61) reconverting the electrical energy to mechanical energy as a source to drive a wheel (20), wherein the generator (101) and the motor (61) are allocated to opposite sides of the vehicle center line (B-B).

2. Hybrid system straddle-type vehicle according to claim 1, comprising the engine (110), the generator (101) converting the mechanical energy generated by the engine (110) to electrical energy, and the motor (61) reconverting the electrical energy to the mechanical energy to drive a wheel (20), wherein the engine is disposed so as to be on the vehicle center line (B-B) extending fore to aft of the hybrid system straddle-type vehicle, a crankshaft (115) of the engine (110) extends in a width direction of the vehicle, a motor rotational shaft (65) of the motor (61) is coupled with the wheel (20), and the generator (101) is disposed on one side and the motor (61) is disposed on the other side relative to the vehicle center line (B-B).

3. Hybrid system straddle-type vehicle according to claim 2, wherein the motor rotational shaft (65) extends generally parallel to an axle (50) of the wheel (20) and is coupled with the wheel (20).

4. Hybrid system straddle-type vehicle according to one of the claims 1 to 3, wherein a cylinder center line (F-F) passing through a generally center portion of a cylinder of the engine (110) is positioned on the vehicle center line (B-B) in a plan view of the hybrid system straddle-type vehicle.

5. Hybrid system straddle-type vehicle according to one of the claims 1 to 4, further comprising an air cleaner (80) purifying air introduced into the engine, and a muffler (70) attenuating noise generated when exhaust gases of the engine are discharged, the muffler (70) is disposed on the generator side and the air cleaner (80) is disposed on the motor side relative to the vehicle center line (B-B).

6. Hybrid system straddle-type vehicle according to one of the claims 1 to 5, further comprising a suspension shaft (130) suspended by a vehicle frame, and a swing unit (200) including the engine (110) and the motor (61) and swinging about an axis of the suspension shaft (130), and a rear end portion of the swing unit (200) supporting the wheel (20) for rotation.

7. Hybrid system straddle-type vehicle according to claim 6, wherein the motor rotational shaft (65) is positioned in front of the axle (50).

8. Hybrid system straddle-type vehicle according to claim 6 or 7, wherein the motor rotational shaft (65) is positioned lower than a line (C-C) connecting the axle (50) and the suspension shaft (130) to each other.

9. Hybrid system straddle-type vehicle according to one of the claims 6 to 8, wherein the motor rotational shaft (65) is positioned higher than a line (E-E) connecting the axle (50) and the crankshaft (115) to each other.
